# FASCICULE DE BREVET EUROPEEN

(11) **EP 3 617 543 B1**
(45) Date de publication et mention de la délivrance du brevet: **15.06.2022**
(21) Numéro de dépôt: 19194162.4
(22) Date de dépôt: 28.08.2019
(51) Int. Cl.: F16D 55/36, B21J 15/00, F16D 69/04

(54) **DISQUE ARRIERE D'UNE PILE DE DISQUES EN CARBONE DE FREIN D'AERONEF EQUIPE DE PLOTS, ET FREIN FAISANT APPLICATION**
HINTERE SCHEIBE EINES STAPELS VON KARBONSCHEIBEN EINER LUFTFAHRZEUGBREMSE, DIE MIT KONTAKTSTELLEN AUSGESTATTET IST, UND BREMSE, DIE DIESE ANWENDET
REAR DISC OF A STACK OF CARBON BRAKE DISCS OF AN AIRCRAFT PROVIDED WITH PADS, AND BRAKE USING SAME

(30) Priorité: 29.08.2018 FR 1857775
(43) Date de publication de la demande: 04.03.2020
(73) Titulaire: Safran Landing Systems, 78140 Vélizy-Villacoublay (FR)
(72) Inventeur: DELFOSSE, Ronan, 77550 MOISSY-CRAMAYEL (FR); COHENCA-MAROUNE, Aurélie, 77550 MOISSY-CRAMAYEL (FR); VITTI, Joseph, 77550 MOISSY-CRAMAYEL (FR); LE FLOCH, Romain, 77550 MOISSY-CRAMAYEL (FR)
(74) Mandataire: Lavialle, Bruno François Stéphane

(56) Documents cités:
- US-A- 4 146 118
- US-A- 5 992 577

## Description

L'invention s'applique à la liaison entre un disque arrière de frein en carbone pour aéronef et des plots (en anglais pucks) rapportés sur le disque arrière. Par disque arrière on entend ici l'élément en carbone qui vient en appui via les plots contre le tube de torsion du frein. Il s'agit généralement du dernier disque stator de la pile de disques en carbone du frein. Ce disque arrière est également appelé plaque arrière.

### ARRIERE PLAN DE L'INVENTION

Il est connu d'équiper le disque arrière de plot (en anglais pucks) destinés à prendre appui dans des logements du tube de torsion du frein prévus à cet effet. Cet appui permet le transfert vers le tube de torsion de l'effort de pression s'appliquant sur les disques lors d'un freinage, tout en autorisant un léger glissement des plots dans les logements. Les plots sont généralement rapportés sur le disque arrière au moyen de rivets. A cet effet, le disque arrière comporte un orifice avec un épaulement conique par lequel un rivet est introduit de sorte que sa tête bombée ou plate à base conique repose sur l'épaulement conique de l'orifice. La tige du rivet traverse le plot et son extrémité est alors déformée contre celui-ci pour solidariser le plot au disque arrière. Cependant, on a pu constater dans certaines circonstances des détériorations du disque arrière, pouvant aller jusqu'à l'extraction du rivet. En outre, la mise en place du rivet est délicate, puisque sa tige doit être introduite dans un orifice ajusté au fond d'un orifice profond, alors que la tête du rivet cache celui-ci.

Le document US-A-5992577 décrit un frein mettant en œuvre des rivets à tête plate.

### OBJET DE L'INVENTION

L'invention vise à proposer une fixation améliorée des plots sur le disque arrière d'une pile de disques en carbone d'un frein d'aéronef, diminuant le risque de détérioration et facilitant sa mise en œuvre.

### PRESENTATION DE L'INVENTION

En vue de la réalisation de ce but, on propose un disque arrière de pile de disques en carbone pour frein d'aéronef destiné à venir en appui contre une extrémité du tube de torsion du frein sur lequel la pile de disque est enfilée, l'appui étant réalisé par l'intermédiaire de plots solidarisés au disque arrière par des rivets chacun insérés dans un orifice traversant du disque arrière et un orifice en regard d'un plot. Selon l'invention, chaque rivet comporte d'une part une tige cylindrique introduite dans les orifices du disque arrière et du plot et ayant une extrémité déformée contre le plot, et d'autre part une tête ayant une partie circulaire cylindrique à base conique comportant une surface périphérique externe se raccordant à une surface conique de la base par un congé de raccordement, l'orifice traversant du disque comportant une première portion adaptée à recevoir la tige du rivet à ajustement, une deuxième portion adaptée à recevoir la partie circulaire cylindrique de la tête du rivet à ajustement, et une portion conique formant transition adaptée à recevoir la base conique de la tête du rivet.

Ainsi, la surface d'appui du rivet sur le disque arrière est très largement augmentée du fait de la surface périphérique externe de la tête cylindrique, ce qui diminue les pressions de matage lors des freinages et diminue donc le risque de détérioration du carbone. De plus, le congé de raccordement évite toute blessure du carbone par la tête. Enfin, la tête cylindrique fait office de jupe de guidage du rivet dans la portion de l'orifice du disque arrière avant l'épaulement, facilitant considérablement la mise en place du rivet dans son logement et limite aussi les risques de blesser le carbone si le rivet vient à perdre sa tension.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en coupe selon un axe central du frein d'un disque arrière de frein d'aéronef au niveau de l'un des orifices recevant un rivet de fixation d'un plot en cours de solidarisation selon l'invention ;
- la figure 2 est une vue analogue à celle de la figure 1, montrant le plot solidarisé au disque arrière.

### DESCRIPTION DETAILLEE DE L'INVENTION

L'invention s'applique à la liaison entre un disque arrière 4 de frein en carbone pour aéronef et des plots 5. Par disque arrière on entend l'élément en carbone qui vient en appui via les plots contre l'extrémité du tube de torsion du frein sur lequel la pile de disques est enfilée. Il s'agit en général du dernier disque stator de la pile de disques du frein.

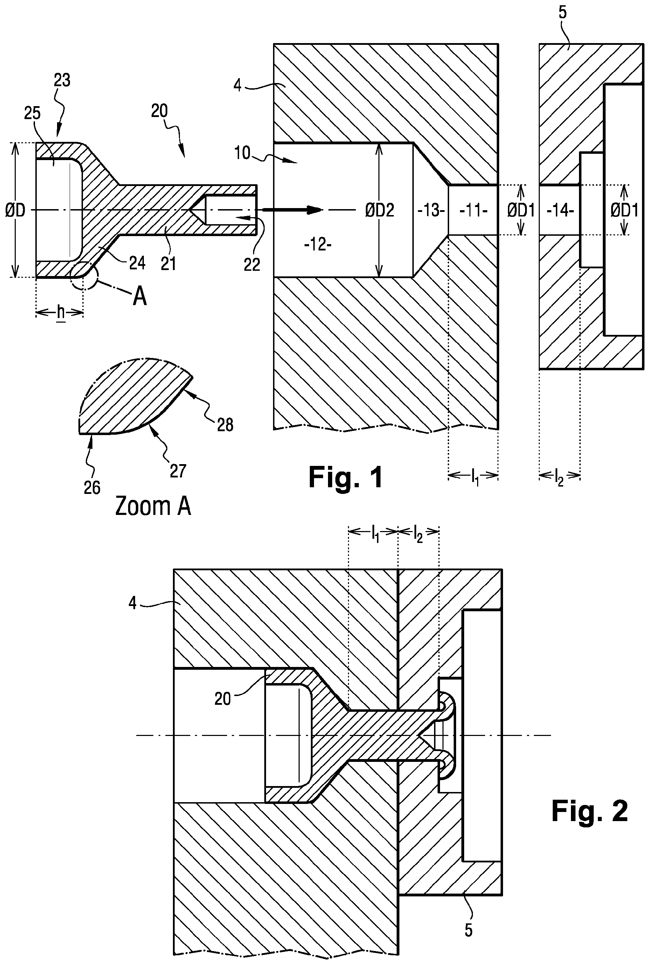

Selon l'invention, chaque plot 5 est rapporté sur le disque arrière 4 selon les dispositions suivantes. Comme cela est visible à la figure 1, le disque arrière 4 comprend, pour chaque plot 5, un orifice 10 traversant présentant une première portion 11 d'un premier diamètre D1 du côté destiné à recevoir le plot 5, et une deuxième portion 12 d'un deuxième diamètre D2 plus important que le premier diamètre, la transition entre les deux portions étant assurée par un épaulement conique 13. Le plot 5 comporte quant à lui un orifice 14 traversant de diamètre égal ou similaire à D1.

Pour solidariser le plot 5 au disque arrière 4, on utilise un rivet 20 qui, selon l'invention, comporte une tige 21 de diamètre légèrement inférieur à D1 pour pouvoir pénétrer à ajustement dans la première portion 11 de l'orifice 10 du disque arrière 4 et dans l'orifice 14 du plot 5. La tige 21 comporte ici une extrémité 22 creuse pour son écrasement contre le plot 5. Le rivet 5 comporte par ailleurs une tête 23 qui comprend une base conique 24 destinée à venir en appui contre l'épaulement conique 13 de l'orifice 10, surmontée par une partie circulaire cylindrique creuse 25 de diamètre extérieur D légèrement inférieur à D2 de sorte à pouvoir pénétrer à ajustement dans la deuxième portion 12 de l'orifice 10 du disque arrière 4. La partie circulaire cylindrique 25 de la tête 23 forme ainsi une jupe guidant le rivet 20 lors de sa mise en place dans l'orifice 10 et assurant que la tige 21 pénètre effectivement dans la première portion 11 dudit orifice, sans se mettre de travers.

Comme cela est visible à la figure 2, l'extrémité de la tige 21 est alors écrasée contre le plot 5 pour solidariser celui-ci au disque arrière 4. La base conique 24 est alors en appui contre l'épaulement conique 13, et la surface externe périphérique 26 de la partie circulaire 25 de la tête 23 constitue une surface d'appui contre le carbone du disque arrière de surface importante propre à diminuer la pression de matage entre le rivet 20 et le carbone. De plus un congé de raccordement 27 (voir détail A de la figure 1) relie la surface externe périphérique 26 de la partie circulaire 25 à une surface externe conique 28 de sa base conique 24, diminuant encore le risque d'endommagement du carbone du disque arrière 4.

De préférence, la partie cylindrique circulaire 25 de la tête 23 a une hauteur h au moins égale à 20% du diamètre extérieur D de ladite partie. En outre, lorsque le rivet 20 est mis en place, la longueur l₁ de la portion 11 de diamètre D1 de l'orifice 10 du disque arrière 4 est supérieure à la longueur l₂ de l'orifice 14 du plot 5. De préférence, la longueur l₁ est similaire à la longueur l₂, de préférence dans une fourchette de 80% à 120% de la longueur l₂. Ces dispositions diminuent encore le risque d'endommagement du carbone du disque arrière 4.

L'invention n'est pas limitée à ce qui vient d'être décrit mais englobe au contraire toute variante entrant dans le cadre défini par les revendications. En particulier, bien qu'ici la tête du rivet soit creuse pour des questions de masse, la tête du rivet pourra être pleine. Il importe cependant que la tête présente une base conique suivie d'une portion cylindrique circulaire.

## Revendications

1. Disque arrière (4) de pile de disques en carbone pour frein d'aéronef, le disque arrière étant équipé de plots (5) et étant destiné à venir en appui contre une extrémité du tube de torsion du frein sur lequel la pile de disques est enfilée, l'appui étant réalisé par l'intermédiaire des plots (5), les plots (5) étant solidarisés au disque arrière (4) par des rivets (20) chacun insérés dans un orifice traversant du disque arrière (4) et un orifice en regard d'un des plots (5), **caractérisé en ce que** chaque rivet (20) comporte une tige cylindrique (21) introduite dans les orifices du disque arrière et du plot (5) et ayant une extrémité (22) déformée contre le plot (5), et une tête (23) ayant une partie circulaire cylindrique (25) à base conique (24) comportant une surface périphérique externe (26) se raccordant à une surface conique (28) de la base par un congé de raccordement (27), et **en ce que** l'orifice traversant du disque arrière (4) comporte une première portion (11) adaptée à recevoir la tige (21) du rivet (20) à ajustement, une deuxième portion (12) adaptée à recevoir la partie circulaire cylindrique (25) de la tête (23) du rivet (20) à ajustement, et une portion conique (13) formant transition adaptée à recevoir la base conique (24) de la tête (23) du rivet (20).

2. Disque arrière selon la revendication 1, dans lequel la tige (21) du rivet (20) a une extrémité creuse (22) .

3. Disque arrière selon la revendication 1, dans lequel la partie circulaire cylindrique (25) de la tête (23) du rivet (20) est creuse.

4. Disque arrière selon la revendication 1, dans lequel la partie circulaire cylindrique (25) de la tête (23) du rivet (20) une hauteur (h) au moins égale à 20% d'un diamètre externe (D) de ladite partie.

5. Disque arrière selon la revendication 1, dans lequel la première portion (11) de l'orifice du disque arrière (4) a une longueur (l₁) comprise entre 80% et 120% d'une longueur (l₁) de l'orifice en regard du plot (5) .

6. Frein d'aéronef comportant un disque arrière (4) selon l'une des revendications précédentes.

## Patentansprüche

1. Hintere Scheibe (4) eines Stapels von Karbonscheiben für eine Luftfahrzeugbremse, wobei die hintere Scheibe mit Kontaktstücken (5) ausgestattet und dazu bestimmt ist, an einem Ende des Torsionsrohrs der Bremse in Anlage zu kommen, auf das der Stapel von Scheiben aufgezogen ist, wobei die Anlage über die Kontaktstücke (5) hergestellt ist, wobei die Kontaktstücke (5) fest mit der hinteren Scheibe (4) durch Niete (20) verbunden sind, die jeweils in eine Durchgangsöffnung der hinteren Scheibe (4) und in eine gegenüberliegende Öffnung eines der Kontaktstücke (5) eingefügt sind, **dadurch gekennzeichnet, dass** jeder Niet (20) eine zylindrische Stange (21) umfasst, die in die Öffnungen der hinteren Scheibe und des Kontaktstückes (5) eingefügt ist und ein an dem Kontaktstück (5) verformtes Ende (22) hat, sowie einen Kopf (23), der einen kreisförmigen zylindrischen Teil (25) mit konischer Basis (24) hat, der eine äußere Umfangsfläche (26) umfasst, die sich an eine konische Fläche (28) der Basis über eine Verbindungshohlkehle (27) anschließt, und dass die Durchgangsöffnung der hinteren Scheibe (4) einen ersten Abschnitt (11) umfasst, der geeignet ist, die Stange (21) des Niets (23) mit Passung aufzunehmen, einen zweiten Abschnitt (12), der geeignet ist, den kreisförmigen zylindrischen Teil (25) des Kopfes (20) des Niets (20) mit Passung aufzunehmen, und einen konischen Abschnitt (13), der einen Übergang bildet und geeignet ist, die konische Basis (24) des Kopfes (23) des Niets (20) aufzunehmen.

2. Hintere Scheibe nach Anspruch 1, bei der die Stange (21) des Niets (20) ein hohles Ende (22) hat.

3. Hintere Scheibe nach Anspruch 1, bei der der kreisförmige zylindrische Teil (25) des Kopfes (23) des Niets (20) hohl ist.

4. Hintere Scheibe nach Anspruch 1, bei der der kreisförmige zylindrische Teil (25) des Kopfes (23) des Niets (20) eine Höhe (h) von mindestens gleich 20% eines Außendurchmessers (D) des genannten Teils hat.

5. Hintere Scheibe nach Anspruch 1, bei der der erste Abschnitt (11) der Öffnung der hinteren Scheibe (4) eine Länge (l₁) hat, die zwischen 80% und 120% einer Länge (l₁) der gegenüberliegenden Öffnung des Kontaktstücks (5) ist.

6. Luftfahrzeugbremse, umfassend eine hintere Scheibe (4) nach einem der vorhergehenden Ansprüche.

## Claims

1. A rear disc (4) of a stack of aircraft carbon brake discs, the rear disk being provided with plucks and being intended to rest against one end of the torque tube of the brake on which the disc stack is threaded, the support being provided by means of the pucks, the pucks (5) being secured to the rear disc by rivets (20) each inserted into a through hole in the rear disc and a hole opposite one of the pucks, **characterised in that** each rivet has a cylindrical rod (21) inserted into the holes of the rear disc and of the puck and having an end (22) deformed against the puck, and a head (23) having a circular cylindrical portion (25) with a conical base (24) having an outer peripheral surface (26) connected to a conical surface (28) of the base by a fillet (27), and **in that** the disc through hole has a first portion (11) adapted to receive the rod of rivet with adjustment, a second portion (12) adapted to receive the circular cylindrical portion of the head of the rivet with adjustment, and a transition conical portion adapted to receive the conical base of the rivet head.

2. A rear disc according to claim 1, wherein the rivet rod (21) has a hollow end (22).

3. A rear disc according to claim 1, wherein the circular cylindrical portion (25) of the rivet head is hollow.

4. A rear disc according to claim 1, wherein the circular cylindrical portion (25) of the rivet head (20) has a height (h) equal to at least 20% of an outer diameter (D) of said portion.

5. A rear disc according to claim 1, wherein the first portion (11) of the rear disc hole has a length (l₁) between 80% and 120% of a length (l₁) of the hole opposite the puck.

6. An aircraft brake including a rear disc according to one of the preceding claims.
